# EUROPÄISCHE PATENTSCHRIFT

(11) **EP 1 798 053 B1**
(45) Veröffentlichungstag und Bekanntmachung des Hinweises auf die Patenterteilung: **13.04.2011**
(21) Anmeldenummer: 06025679.9
(22) Anmeldetag: 12.12.2006
(51) Int. Cl.: D21H 17/50, B41M 5/50

(54) **Substrat für den Tintenstrahl-Druck**
Substrate for inkjet printing
Substrat pour l'impression par jet d'encre

(30) Priorität: 16.12.2005 DE 102005060758
(43) Veröffentlichungstag der Anmeldung: 20.06.2007
(73) Patentinhaber: Kronotec AG, 6006 Luzern (CH)
(72) Erfinder:
(74) Vertreter: Wenzel & Kalkoff

(56) Entgegenhaltungen:
- DE-A1- 1 619 244
- DE-A1- 2 100 907
- DE-A1- 2 110 309
- DE-A1- 2 424 471
- DE-A1- 2 734 638
- DE-A1- 2 825 590
- DE-B- 1 272 878
- US-A- 3 769 143

## Beschreibung

Die Erfindung betrifft ein Substrat für den Inkjet-Druck sowie ein mit diesem Substrat beschichtetes Paneel aus Holzwerkstoff.

Zahlreiche Oberflächen sind bedruckbar. Sie unterschieden sich jedoch darin, welche Mengen Druckfarbe vom jeweiligen Substrat aufgenommen werden und wie ausgeprägt der Verlauf der Druckfarbe jeweils auf einem Substrat ist. Für industrielle Anwendungen kommt es darauf an, dass die Inkjet-Druckfarbe wirtschaftlich einsetzbar ist. Ist das Substrat zu saugfähig, muss zu viel Druckfarbe eingesetzt werden und die Druckfarbe verläuft durch ein zu stark saugendes Substrat. Bekannte, übliche Druckpapiere weisen geringe Anteile von kondensiertem Füllmaterial auf, um die Bedruckbarkeit zu verbessern (DE 2100907; DE 2110309).

Es wird gewünscht, flächige Produkte zu gestalten und auch hier Inkjet-Druckverfahren einzusetzen. Insbesondere Holzwerkstoff-Oberflächen sollen mit Inkjet-Druckverfahren gestaltbar sein. Die bisher angebotenen Oberflächen von Holzwerkstoffen sind zu uneben und von zu ungleichmäßiger Saugkraft, um mit Inkjet-Druckverfahren gestaltbar zu sein. Bekannte Beschichtungen sind teuer bzw. nur sehr eingeschränkt geeignet, da die Druckfarbe häufig auf Oberflächenbeschichtungen von Holzwerkstoffen nicht zufrieden stellend haftet. Unter dem Begriff Holzwerkstoffe werden im Zusammenhang mit dieser Erfindung sämtliche Span- und Faserplattenarten, Sperrholz, Furnierplatten, aber auch Massivholzoberflächen zusammengefaßt.

Bisher wird eine dekorative Gestaltung von Holzwerkstoffen überwiegend durch bedruckte Folien bzw. Laminate erreicht, so wie z. B. in der DE 29 03 172 beschrieben. Vergleichbare Produkte werden auch beschrieben in der DE 24 24 471 A1, US-A-3 769 143, DE 16 19 244 A1, DE 28 25 590 A1, DE 27 34 638 A1, DE 12 72 878 B. Folien und Laminate können wirtschaftlich jedoch nur in großen Mengen hergestellt werden. Zudem lassen sich mit neu entwickelten Lacken und entsprechenden Beschichtungsverfahren inzwischen Holzwerkstoffe mit höherwertigen, ästhetisch anspruchsvollen oder besonders naturgetreu gestalteten Oberflächen erzielen.

Bisher ist ein Bedrucken von Holzwerkstoffen erst nach aufwändiger mechanischer Behandlung möglich. Das nach dem heutigen Stand der Technik unvermeidbare Zwischenschleifen von Grundierungen vor dem abschließenden Dekorauftrag wird jedoch als großer Nachteil angesehen.

Es ist Aufgabe der Erfindung, ein gut bedruckbares Substrat für das Ink-Jet-Verfahren sowie ein mit dem Substrat beschichtetes Paneel aus Holzwerkstoff bereitzustellen.

Diese Aufgabe wird gelöst durch ein Substrat, nämlich Harnstoff-Formaldehyd-Kondensat, für Inkjet-Druck, aufweisend ein Fasergerüst, das mit einem polaren Füllmaterial gefüllt ist, und das einseitig mit einem Klebstrich versehen ist. Unter einem Klebstrich wird ein dünner Auftrag eines Materials verstanden, dass zum Verbinden des Substrats mit einer Holzwerkstoff-Oberfläche dient.

Es hat sich herausgestellt, dass ein Substrat mit einem polaren Füllmaterial das sparsame Auftragen von Inkjet-Druckfarbe erlaubt. Als besonders vorteilhaft ist anzumerken, dass die Bindemittel-Komponente von Inkjet-Druckfarben auf dem polaren Füllmaterial gut haftet. Die vollständige Füllung des Fasergerüsts soll bewirken, dass die zu bedruckende Oberfläche des Substrats nicht mehr papierähnlich wirkt sondern die Inkjet-Druckfarbe optimal aufnimmt.

Durch das Aufpressen eines Substrats auf die Holzwerkstoff-Oberfläche mittels des Klebstrichs entfallen bisher übliche aufwändige, mehrstufige mechanische Vorbereitungen wie das mehrfache Zwischenschleifen von Grundierungen auf der Holzwerkstoff-Oberfläche. Wird das Substrat -was bevorzugt wird- mittels einer Presse auf den Holzwerkstoff aufgebracht, dann gewährleistet das polare Füllmaterial nach dem Aufpressen des Substrats eine besonders gut geglättete Oberfläche für die Inkjet-Druckfarbe.

Das für die Herstellung des Substrats einzusetzende Fasergerüst kann einfach und leicht gewählt werden. Es kann ein einfaches Papier sein, das eine gute Aufnahmefähigkeit für das Füllmaterial bietet. Papier bietet sich auch aus Kostengründen an; es ist einfach verfügbar. Ein Papier von mindestens 60 g/m², vorzugsweise von 80 g/m² bis 100 g/m² eignet sich sehr gut. Andere Papiergewichte können eingesetzt werden, ausschlaggebend ist allein die Eignung, polares Füllmaterial aufzunehmen und die Kosten des Fasergerüsts. Es kann aber auch ein Gelege aus Viskosefasern oder aus Kunststofffasern eingesetzt werden. Nach einer vorteilhaften Weiterbildung der Erfindung sind entweder das Fasergerüst oder das polare Füllmaterial pigmentiert. Die gute Haftung und der sparsame Auftrag der Ink-jet-Druckfarbe sind auch bei unpigmentiertem Fasergerüst gegeben. Um jedoch ein brillantes Druckbild zu erhalten, ist es zweckmäßig, weiße Pigmente, insbesondere Titandioxid einzusetzen, damit das Substrat möglichst hell wird. Eine besonders einfache Möglichkeit, ein helles Substrat zu erhalten ist der Einsatz von pigmentiertem Papier. Das Fasergerüst ist dann bereits vor Auftragen des polaren Füllmaterials auf hohe Weißgrade eingestellt.

Erfindungsgemäß wird als polares Füllmaterial Harnstoff-Formaldehyd-Kondensat, insbesondere wässrige Harnstoff-Formaldehyd-Kondensate eingesetzt. Harnstoff-Formaldehyd-Kondensate sind preiswert, lassen sich gut verarbeiten und bilden zusammen mit dem Fasergerüst ein besonders geeignetes Substrat. Hervorzuheben ist die besonders gute Adhäsion der Druckfarbe auf den Harnstoff-Formaldehyd-Kondensaten. Füllstoffe, die z. B. zum Füllen von Papier bekannt sind, um dessen Druckeigenschaften zu verbessern, sind meist anorganische Füllstoffe. Sie sind für das erfindungsgemäße Substrat nicht gut geeignet, da sie zwar einen hohen Weißgrad ermöglichen, aber nicht alterungsbeständig sind. Die Papierfasern sind von diesen Füllstoffen (typisch: Kreide) nicht so vollständig umhüllt, dass sie ein Vergilben infolge der Einwirkung von UV-Licht ausschließen. Da das Substrat aber in aller Regel als Untergrund für Druckbilder dient, die über lange Zeit unverändert stabil bleiben sollen (Möbelfronten, Wand-, Decken- oder Fußbodenpaneele), kommt es im Zusammenhang mit dieser Erfindung sehr auf die langfristige Lichtechtheit an, so wie sie z.B. durch die vorstehend erwähnten polaren Füllmaterialien gewährleistet wird.

Besonders bevorzugt ist es, das polare Füllmaterial durch Tränken des Fasergerüsts einzubringen. Mittels Quetschwalzen, die dem Tränkbad nachgeschaltet sind, kann der gewünschte Einsatz von Füllmaterial gut eingestellt werden. Aber auch das Streichen, Gießen oder Walzen des Füllmaterials ist machbar. Wie schon vorstehend beschrieben wird das Fasergerüst vollständig mit dem polaren Füllmaterial gefüllt. Es ist von besonderer Bedeutung, dass das Fasergerüst vollständig von Füllmaterial umkleidet ist. Das Aufbringen von Inkjet-Druckfarbe auf Fasern führt zum einen zu einem schlecht kontrollierbaren Druckergebnis aufgrund der Saugkraft-Unterschiede von Füllmaterial und Fasergerüst. Fasern, insbesondere Papierfasern sind zudem zu weich und zum anderen ist beim Einsatz von Papierfasern nachteilig, dass sie auf lange Sicht gesehen vergilben und dadurch die Brillanz des Druckergebnisses nachteilig beeinflussen.

Das mit dem polaren Füllmaterial gefüllte Fasergerüst kann ein Gesamtgewicht von bis zu 140 g/m² erreichen, bevorzugt von bis zu 170 g/m², vorteilhaft von bis zu 200 g/m², besonders bevorzugt von bis zu 240 g/m².

Nach dem Einbringen des polaren Füllmaterials wird das Substrat getrocknet. Wird vernetzbares Füllmaterial verwendet, härtet es durch diesen Trocknungsvorgang aus. Der Trocknungsvorgang kann bevorzugt auch dadurch erfolgen, dass das Substrat in einer Presse, üblicherweise einer Kurztaktpresse, unter Druck und Hitze verpresst wird. Ist das getrocknete bzw. gehärtete Substrat der Presse zu entnehmen, ohne dass es anhaftet, ist der Füllstoff, hier Harnstoff-Formaldehyd-Kondensat, getrocknet bzw. gehärtet. Es ist allerdings anzumerken, dass das polare Füllmaterial auch nach dem Aushärten nicht völlig inert ist. Es verbleiben in dem ausgehärteten bzw. vernetzten Füllmaterial noch polare Gruppen, die die gute Haftung der Inkjet-Druckfarbe bewirken. Dadurch, dass das polare Füllmaterial nach dem Einbringen in das Fasergerüst ausgehärtet bzw. vernetzt wird, gehen ursprünglich etwa vorhandene Bindemittel-Eigenschaften verloren. Aus diesem Grund wird im Zusammenhang mit der Erfindung der Begriff Füllmaterial verwendet, da hier auf die Eigenschaften des ausgehärteten Materials abgestellt wird.

Nach dem Auftragen des Füllmaterials wird das Substrat mit einem Klebstrich versehen; der Klebstrich dient zum Verbinden des Substrats mit dem zu bedruckenden Holzwerkstoff. Als Kleber für den Klebstrich wird vorteilhaft ein duroplastisches Bindemittel eingesetzt, das eine gute Bindung zwischen Substrat und Holzwerkstoff aufbaut. Besonders bevorzugt wird der Einsatz von Melaminharz. Bereits geringe Mengen von Bindemittel genügen, um das Substrat auf Holzwerkstoffen zu fixieren. Nach einer bevorzugten Ausführungsform der Erfindung genügen bereits bis zu 40 g/m² Klebstrich, um ein zuverlässiges Aufbringen des Substrats auf die jeweils zu bedruckende Holzwerkstoff-Oberfläche zu gewährleisten. Die Menge an Klebstrich kann aber auch weiter optimiert werden, Auftragsmengen können auf bis zu 20 g/m², bevorzugt bis auf maximal 15 g/m² gesenkt werden. Das so hergerichtete Substrat wird anschließend an den Auftrag des Klebstrichs 50 weit getrocknet, dass das Substrat transport- und lagerfähig ist. Bevorzugt wird durch das Trocknen eine Restfeuchte von ca. 3-5 % bezogen auf das Gesamtgewicht des Substrats eingestellt. Nach dem zweiten Trocknungsvorgang ist der Klebstrich vorgetrocknet, aber das aufgetragene Kunstharz ist unter erneutem Einfluss von Druck und Temperatur reaktiv. Der Klebstrich ist -anders als das polare Füllmaterial - nur vorgetrocknet; er ist klebfrei aber noch reaktiv.

Durch das Auftragen des Klebstrichs erhält das Substrat eine geringfügig asymmetrische Ausbildung. An sich ist eine Asymmetrie bei solchen dünnen, blattförmigen Substraten unerwünscht, da sie sich nachteilig auf die Verarbeitungseigenschaften auswirkt. Asymmetrische, blattförmige Substrate neigen dazu sich zusammenzurollen, so dass sie nur mit erhöhtem Aufwand auf die Holzwerkstoffe aufgelegt werden können. Überraschenderweise wirkt sich die geringe Asymmetrie des erfindungsgemäßen Substrats nicht nachteilig auf die Verarbeitung des Substrats aus. Dies ist als Vorteil des erfindungsgemäßen Substrats anzusehen.

Die getrockneten Substrate verhalten sich durch den Klebstrich beim Verpressen auf der Holzwerkstoff-Oberfläche duroplastisch. Der Klebstrich, der die Asymmetrie verursacht, ist auch nach dem Trocknen noch reaktiv, also funktionsfähig, er wird in der Regel durch Einwirken von Druck und/oder Temperatur aktiviert. Das Substrat wird vorzugsweise mittels üblicher Pressen unter Druck und Temperatur auf die Holzwerkstoff-Oberfläche aufgebracht. Das Aufpressen der Substrate auf die Holzwerkstoffe führt nachträglich zu einer Glättung und Verdichtung der Oberfläche, was zum Einstellen der vorgegebenen Saugfähigkeit des Substrats beiträgt. Die erforderlichen Pressen sind übliche Anlagen der Holzwerkstoffbe- und -verarbeitung, so dass das Substrat ohne besonderen apparativen Aufwand einsetzbar ist.

Das erfindungsgemäße Substrat ist farbecht, es bietet bei guter mechanischer Festigkeit eine gute Haftung für die Bindemittel, die in der Inkjet-Druckfarbe enthalten sind. Als besonders vorteilhaft ist hervorzuheben, dass bei beanspruchten Oberflächen, z. B. bei Fußbodenpaneelen oder Küchenarbeitsplatten, eine Versiegelung der aufgetragenen Druckfarbe möglich ist. Anders als bei bekannten Grundierungen, auf der derartige Versiegelungen nicht haften, bietet das erfindungsgemäße Substrat nicht nur für Druckfarbe sondern auch für Versiegelung eine gute Haftung. Insbesondere eine Beschichtung mit Melamin, typischerweise in Form eines Melamin-Overlays, haftet gut auf dem bedruckten Substrat. Bevorzugt wird, wenn das Overlay, z.B. durch Einbetten von Korund, abriebfest gestaltet ist.

Wesentliche Merkmale der Erfindung werden in den nachstehenden Ausführungsbeispielen beispielhaft erläutert. Es zeigen:

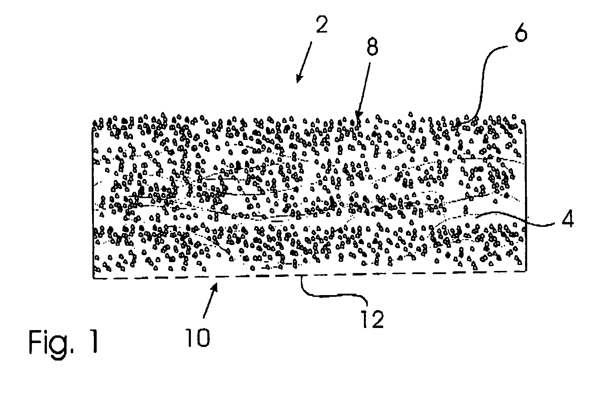

Fig. 1 eine schematische Darstellung einer Ausführungsform des erfindungsgemäßen Substrats.
Fig. 1 zeigt ein Substrat 2, das ein Fasergerüst 4, hier ein 80 g/m² Papier, das -bezogen auf das Gesamtgewicht des Papiers- ca. 40 % Titandioxid enthält. Das Papier weist einen Weißgrad von über 85% ISO auf. Das Fasergerüst 4 wurde in einem Tauchbad mit 100 g/m² wässrigem Harnstoff-Formaldehyd-Kondensat (bezogen auf das Gesamtgewicht des getrockneten Substrats) als polarem Füllmaterial 6 getränkt. Das polare Füllmaterial 6 durchtränkt das Fasergerüst 4 vollständig und gleichmäßig. Das polare Füllmaterial 6 bildet die Oberfläche 8 des Substrats 2. Diese Oberfläche 8 ist z. B. hinsichtlich der Saugfähigkeit und der Haftung auf die später aufzubringende Inkjet-Druckfarbe sowie eine etwa aufzutragende Versiegelung abgestimmt.

Auf die Unterseite 10 des Substrats 2 ist als Klebstrich 12 eine mit 20 g/m² sehr dünne Schicht Melaminharz mittels Raster-Walzen aufgetragen. Der Auftrag des Klebstrichs 12 erfolgt in derselben Anlage wie das Tränken mit dem Füllmaterial 6; das Substrat 2 wird in einem Arbeitsgang vollständig getränkt und beschichtet.

Ist das Substrat 2 aus Fasergerüst 4, polarem Füllmaterial 6 und Klebstrich 12 fertiggestellt, wird es in einem Schwebetrockner getrocknet, bis eine Restfeuchte von 4 Gewichts-% Wasser bezogen auf das gesamte Substrat 2 erreicht ist. Das Substrat 2 weist nach dem Trocknen ein Gesamtgewicht von 200 g/m² auf. Das polare Füllmaterial 4 ist nach dem Trocknen vollständig vernetzt. Der Klebstrich 12 ist zwar auch zu einem lagerstabilen Film getrocknet. Das Melamin ist aber unter Einwirkung von Druck und Temperatur immer noch reaktiv und daher geeignet, das Substrat auf einer Holzwerkstoff-Oberfläche zu fixieren.

Das Substrat 2 kann trotz des geringfügig asymmetrischen Aufbaus gut gefördert und verarbeitet werden. Es liegt glatt, sowohl während des Lagerns als auch auf der Holzwerkstoff-Oberfläche und eignet sich damit gut für die industrielle Verarbeitung.

Auf eine mitteldichte Faserplatte (MDF-Platte), die z. B. für die Verwendung als Möbelfront vorgesehen ist, wird das Substrat 2 aufgelegt. MDF-Platte und Substrat 2 werden in eine Presse überführt. Bei einer Temperatur von 180 °C und einem Druck von ca. 3 N/mm² werden Substrat 2 und MDF-Platte innerhalb von 20 Sekunden miteinander verpresst, dadurch dass der Klebstrich 12 unter der Einwirkung von Druck und Temperatur erweicht und auf der Oberfläche der MDF-Platte haftet. Ein weiterer zunächst unerwarteter aber sehr vorteilhafter Effekt des Pressens ist, dass das polare Füllmaterial, das nicht mehr reaktiv ist, durch den Druck der Presse geglättet wird, was sich sehr vorteilhaft auf die Qualität des später entstehenden Druckbilds auswirkt. Nach dem Verpressen von Substrat 2 und MDF-Platte weist letztere eine helle, glatte Oberfläche auf, die eine vorgegebene und auf die später aufzubringende Druckfarbe abgestimmte Saugfähigkeit und eine gute Haftung für diese Inkjet-Druckfarbe auf. Die so beschichtete MDF-Platte kann unmittelbar weiter verarbeitet werden, sie kann aber auch gelagert und nach Wochen oder Monaten weiter verarbeitet werden.

Wenn gewünscht, kann das Substrat 2 beim Aufpressen auf die Holzwerkstoffplatte noch geringfügig verformt werden. Es können beispielsweise Poren oder Fugenstrukturen eingearbeitet werden. Das Verformen des Substrats 2 geschieht am einfachsten durch strukturierte Pressbleche.

## Patentansprüche

1. Mit Inkjet-Druck bedruckbares Substrat (2) zum Aufpressen auf Holzwerkstoffe, aufweisend ein Fasergerüst (4), das mit einem polaren Füllmaterial (6) gefüllt ist, und das einseitig mit einem Klebstrich (12) versehen ist,
**dadurch gekennzeichnet, daß**
ausgehärtetes Harnstoff-Formaldehyd-Kondensatdas Fasergerüst als polares Füllmaterialvollständig füllt und umhüllt und die Oberfläche (8) des Substrats (2) bildet.

2. Substrat nach Anspruch 1, **dadurch gekennzeichnet, dass** der Füllgrad des Substrats (2) mit Füllmittel (6) bis zu 60 Gewichts-%bezogen auf das Gewicht des Substrats (2) beträgt.

3. Substrat nach Anspruch 1, **dadurch gekennzeichnet, dass** das Fasergerüst (4) ein Gewicht von mindestens 40 g/m² aufweist.

4. Substrat nach Anspruch 1, **dadurch gekennzeichnet, dass** ein vorgetrockneter, duroplastischer Klebstrich (12), insbesondere ein Melaminharz eingesetzt ist.

5. Substrat nach Anspruch 1, **dadurch gekennzeichnet, dass** der Klebstrich (12) in einer Menge von bis zu 40 g/m² aufgetragen ist.

6. Substrat nach Anspruch 1, **dadurch gekennzeichnet, dass** das Substrat (2) ein Gesamtgewicht von bis zu 240 g/m² aufweist.

## Claims

1. A substrate (2) printable with ink jet printing, and pressable onto wood-based materials, comprising a fiber structure (4) filled with a polar filler (6), and provided with a coating of adhesive (12) on one side,
**Characterized in that**
cured urea-formaldehyde condensate, which is used as the polar filler, entirely fills and envelops the fiber structure and forms the surface (8) of the substrate (2).

2. The substrate according to claim 1, **characterized in that** the degree to which substrate (2) is filled with filler (6) is up to 60 weight% with reference to the weight of substrate (2).

3. The substrate according to claim 1, **characterized in that** the fiber structure (4) has a weight of at least 40 g/m²

4. The substrate according to claim 1, **characterized in that** a predried thermosetting coating of adhesive (12), in particular a melamine resin, is used.

5. The substrate according to claim 1, **characterized in that** the coating of adhesive (12) is applied in an amount of up to 40 g/m².

6. The substrate according to claim 1, **characterized in that** the substrate (2) has an overall weight of up to 240 g/m².

## Revendications

1. Substrat (2) pouvant être imprimé par impression jet d'encre pour appliquer par pression sur des matériaux à base de bois présentant une structure de fibres (4) qui est remplie d'un matériau de remplissage polaire (6) et qui est pourvue d'un côté d'un trait de colle (12),
**caractérisé en ce**
**qu'**un condensé durci de formaldéhyde et d'urée remplit et enveloppe complêtement la structure de fibres comme matériau de remplissage polaire et forme la surface (8) du substrat (2).

2. Substrat selon la revendication 1, **caractérisé en ce que** le degré de remplissage du substrat (2) avec du matériau de remplissage (6) est de 60 % en poids maximum par rapport au poids du substrat (2).

3. Substrat selon la revendication 1, **caractérisé en ce que** la structure de fibres (4) présente un poids d'au moins 40 g/m².

4. Substrat selon la revendication 1, **caractérisé en ce qu'**une trait de colle thermodurcissable préséché (12), en particulier une résine de mélamine, est mis en place.

5. Substrat selon la revendication 1, **caractérisé en ce que** le trait de colle (12) est appliqué en une quantité maximale de 40 g/m².

6. Substrat selon la revendication 1, **caractérisé en ce que** le substrat (2) présente un poids total maximal de 240 g/m².
